# EUROPÄISCHE PATENTSCHRIFT

(11) **EP 2 331 447 B1**
(45) Veröffentlichungstag und Bekanntmachung des Hinweises auf die Patenterteilung: **22.08.2012**
(21) Anmeldenummer: 08873873.7
(22) Anmeldetag: 18.12.2008
(51) Int. Cl.: B66F 9/075, B66F 9/24, H02K 1/27, H02K 3/28, H02K 21/12, H02K 7/102, H02K 7/116, H02K 7/14

(54) **HUBSTAPLERANTRIEB**
FORKLIFT TRUCK DRIVE
SYSTÈME D'ENTRAÎNEMENT DE CHARIOT ÉLÉVATEUR

(30) Priorität: 10.04.2008 DE 102008018413
(43) Veröffentlichungstag der Anmeldung: 15.06.2011
(73) Patentinhaber: Powertrans S.A., 5548 Remich (LU)
(72) Erfinder: Dr. Lachenmaier, Sepp, 42329 Wuppertal (DE)
(74) Vertreter: Durm & Partner
(86) Internationale Anmeldenummer: PCT/EP2008/067948
(87) Internationale Veröffentlichungsnummer: WO 2009/124612

(56) Entgegenhaltungen:
- EP-A- 1 806 313
- EP-A- 1 852 966
- JP-A- 2004 088 905

## Beschreibung

Die vorliegende Erfindung betrifft einen Hubstaplerantrieb mit einem permanentmagnetisch erregten Elektromotor.

Zum Betrieb von umweltfreundlichen Hubstaplern und führerlosen Transportsystemen ist es zweckmäßig, batteriebetriebene und batteriegepufferte elektrische Antriebe einzusetzen. Damit lassen sich die Emissionen der Antriebe auf ein Minimum reduzieren. Die möglichst effiziente Nutzung der installierten Energie stellt hohe Anforderungen an die Wirkkette: Energiespeicher (Akku) - Wechselrichter - Hub-, Fahr-, Lenk-Motor - Getriebe.

Um eine hohe Nutzungszeit bis zur nächsten Aufladung des Energiespeichers zu erhalten, muss die Kette einen möglichst hohen Wirkungsgrad aufweisen. Je seltener der Akku aufgeladen werden muss, desto höher ist die Lebensdauer des Akkus, da die Anzahl der Vollladezyklen derartiger Akkus begrenzt ist.

Aus dem Stand der Technik sind verschiedene Ausführungen von Hubstaplerantrieben bekannt. Die Funktionen derartiger Antriebe sind Fahren, Heben und Lenken. Die Funktionen Fahren und Lenken können getrennt mit Hilfe von zwei Traktionsmotoren, die gleich ausgebildet sein können, realisiert werden. Sie können auch mit Hilfe eines Differentials realisiert sein. Hinsichtlich der Hubfunktion wird die erforderliche Energiedichte heute durch fluid-dynamische Untersetzungen erreicht.

Klassische Antriebskonzepte auf diesem Gebiet verwenden die einfach regelbare Gleichstrommaschine. Die üblicherweise im Traktionsstrang von Hubstaplerantrieben verwendeten Reihenschluss-Gleichstrommaschinen zeichnen sich durch optimales Betriebsverhalten bezüglich der Zugkrafterzeugung sowohl beim Beschleunigen als auch im Teillastbereich aus. Sie vereinen die Möglichkeit der natürlichen Feldschwächung mit der Krafterzeugung auf größtmöglichem Rotorumfang. Allerdings ist die Lebensdauer der stromübertragenden Bürsten begrenzt, insbesondere wegen der hohen geforderten Beschleunigungsmomente und Ströme. Da die Gleichstrommotoren ein relativ niedriges Drehmoment haben, ist ein mehrstufiges Getriebe notwendig. Typischerweise werden für den Fahrantrieb vierpolige Maschinen mit zwei- bis dreistufigen Getrieben eingesetzt.

Es sind auch Hubstaplerantriebe mit permanentmagnetisch erregten Traktions-Kollektormotoren bekannt. Betrachtet man den Wirkungsgrad verschiedener elektrischer Antriebsprinzipien in Abhängigkeit von der Wellenleistung, ergibt sich daraus, dass permanentmagnetisch erregte Traktions-Kollektormotoren gerade im Teillastbereich, der für die Hubstaplertechnik wichtig und charakteristisch ist, einen guten Wirkungsgrad erzielen.

Bei neueren Entwicklungen kommen auch bürstenlose Asynchronmaschinen zum Einsatz. Sie zeichnen sich dadurch aus, dass sie analog der Reihenschlussmaschine eine natürliche Feldschwächung besitzen. Betrachtet man den Wirkungsgrad solcher Maschinen in Abhängigkeit von der Nennleistung für verschiedene Polzahlen, so zeigt sich, dass die vierpolige Maschine den besten Wirkungsgrad hat. Sie wird mit zwei- bis dreistufigen Getrieben eingesetzt.

Die Asynchronmaschine besitzt jedoch in dem für Hubstapler wichtigen Teillastbereich einen schlechten Wirkungsgrad. Es ist bekannt, dass der Wirkungsgrad von Asynchronmaschinen erhöht werden kann, wenn der Fluss der Maschine gezielt abgesenkt wird. Die Verbesserung des Antriebswirkungsgrades ist jedoch gering, so dass dieser unter dem der Gleichstrommaschine bleibt. Außerdem muss der Fluss für Beschleunigungsvorgänge wieder aufgebaut werden. Dadurch verliert der Antrieb an Dynamik.

Permanent erregte Synchronmaschinen erreichen bekanntermaßen den besten Wirkungsgrad im Teillastbereich, weil hier keine Magnetisierungsverluste anfallen. Ein Hubstaplerantrieb mit einem permanent magnetisch erregten Elektromotor ist aus EP 1 806 313 A1 bekannt.

Der Erfindung liegt das technische Problem zugrunde, die Effizienz des Antriebs eines Hubstaplers zu verbessern.

Dieses Problem wird durch einen Hubstaplerantrieb mit permanentmagnetisch erregtem Elektromotor gemäß Anspruch 1 gelöst. Gegenstand der Erfindung ist auch ein Hubstapler mit einem solchen Antrieb.

Der erfindungsgemäße Hubstaplerantrieb umfasst einen (bevorzugt genau einen) permanentmagnetisch erregten Elektromotor. Der Elektromotor hat einen Stator mit Einzelzahnspulen, die mehrphasig zusammengeschaltet sind. Hierbei wird eine Spule um einen einzelnen Zahn gewickelt. Das Wicklungsende der Spule kann zu einem anderen Einzelzahn geführt werden, um den dann wieder eine Spulen-Wicklung erfolgt. Jedenfalls sitzt die gewickelte Einzelzahnspule auf einem einzelnen Zahn und umschließt nicht mehrere benachbarte Zähne. Der Stator ist derart gewickelt, dass benachbarte Zähne jeweils gewickelte Spulen unterschiedlicher Phasen aufweisen. Vorzugsweise ist der Motor mit wenigstens zwei Phasen beschaltet. Besonders bevorzugt wird der Motor als dreiphasiger Motor betrieben. Bei einem dreiphasigen Motor liegt also auf einem Einzelzahn eine Spule der Phase U, während auf dem einen benachbarten Zahn eine Spule der Phase V und auf dem anderem benachbarten Zahn eine Spule der Phase W liegt. Dieses Wicklungsmuster setzt sich dann über alle Zähne des Stators fort. Somit sind mehrere Einzelzahnspulen zu einer Phase zusammengeschaltet, während andere Einzelzahnspulen zu einer anderen Phase zusammengeschaltet sind. Die Einzelzahnspulen sind mehrphasig zusammengeschaltet. Bei einem zweiphasigen Motor sind folglich jeweils die Hälfte der Einzelzahnspulen zu einer Phase zusammengeschaltet. Bei einem dreiphasigen Motor ist jeweils ein Drittel der Einzelzahnspulen zu einer Phase zusammengeschaltet.

Grundsätzlich ist es möglich, zwischen zwei Spulen des Stators einen zusätzlichen (leeren) Zahn anzuordnen, der keine Wicklung trägt, so dass die Zahl der Zähne nicht mit der Anzahl der Statorspulen übereinstimmt. Für den erfindungsgemäßen Motor ergibt sich hierdurch jedoch kein technischer Nutzen.

Der Rotor des erfindungsgemäßen Elektromotors hat permanentmagnetisch erregte Pole, die dem Stator zugewandt sind. Die Polzahl des Rotors ist mindestens 14. Der Motor hat also mindestens 7 Polpaare.

Der Synchronmotor des erfindungsgemäßen Hubstaplerantriebs wird auch als "Torque-Motor" bezeichnet, der ein hohes Drehmoment bei relativ niedrigen Drehzahlen ermöglicht. Ein Torque-Motor im Sinne der vorliegenden Erfindung lässt sich dadurch charakterisieren, dass er mehrphasig beschaltet ist und sein Stator Einzelzahnwicklungen aufweist.

In einer bevorzugten Ausführungsform weist der Rotor des Elektromotors eine Polzahl auf, die größer oder gleich 20 ist. Eine hohe Polzahl des Motors ermöglicht ein geringeres Volumen des für die Führung des magnetischen Flusses erforderlichen Jochs des Stators. Je höher die Polzahl des Rotors ist, desto weniger Material (z.B. Eisen) ist für die Flussführung im Stator notwendig. Demzufolge kann der Innendurchmesser des Rotors zunehmen, was wiederum ein erhöhtes Drehmoment des Motors ermöglicht. Darüber hinaus ist die Herstellung eines dünneren Jochs kostengünstiger.

In Abhängigkeit von der Polzahl ist auch die Anzahl der Zähne festgelegt, die vorzugsweise mit der Anzahl der elektromagnetischen Spulen übereinstimmt. Die Zähnezahl ist bevorzugt kleiner als die Polzahl. Dies hat hauptsächlich Fertigungsgründe. Selbstverständlich ist prinzipiell (aus elektrotechnischer Sicht) auch eine Spulenzahl möglich, die größer ist als die Polzahl. Die Anzahl der Spulen muss lediglich durch die Anzahl der Phasen teilbar sein.

Durch die Erfindung wird folglich eine Synchronmaschine zur Verfügung gestellt, die sich ideal für den Belastungsfall von Hubstaplern eignet, bei dem typischerweise kurze und hohe Beschleunigungen gefordert werden, andererseits aber lange Teillastphasen auftreten. Dabei werden die heute eingesetzten vierpoligen Gleichstrom- oder Asynchronmaschinen hinsichtlich des kollektiven Wirkungsgrades deutlich übertroffen. Abhängig von dem jeweils geforderten Momentenfaktor (auch Momentenverhältnis genannt), also von dem Verhältnis von Beschleunigungsmoment zu Nennmoment, dass bevorzugt größer oder gleich 2, besonders bevorzugt größer oder gleich 2,5 und sehr bevorzugt größer oder gleich 3 ist, können solche Synchronmaschinen mit oder ohne Getriebestufe eingesetzt werden.

In einer bevorzugten Ausführungsform schließt der Hubstaplerantrieb ein Getriebe ein. Bei dem getriebelosen Traktionsantrieb ist der Antriebswirkungsgrad entsprechend erhöht. Im Fall des getriebelosen Antriebs hat die Synchronmaschine vorzugsweise mindestens sechzehn Pole, bevorzugt mindestens achtzehn Pole, sehr bevorzugt größer oder gleich 20 Pole.

Somit lässt sich durch den erfindungsgemäßen Hubstaplerantrieb wenigstens eine Getriebestufe gegenüber den bekannten Antrieben eliminieren. Damit erfüllt der erfindungsgemäße Hubstaplerantrieb die wesentlichen Erfordernisse, die an einen Hubstapler gestellt werden. Zum einen soll der Antrieb sehr kompakt sein, um die erforderliche Wendigkeit des Hubstaplers zu gewährleisten. Der Antrieb mit dem Elektromotor kann in die Radnabe des üblicherweise gelenkten Hinterrads eingebaut werden, wodurch die Größe begrenzt ist. Neben der kompakten Bauweise ist auch eine extreme Robustheit des Antriebs vorhanden. Vor allem harte Rückwirkungsstöße, wie sie beispielsweise auftreten, wenn der Hubstapler mit dem angetriebenen Rad gegen ein Hindernis, z.B. eine Bordsteinkante, stößt, müssen von dem Antrieb, insbesondere von dem Getriebe ausgehalten werden. Gegenüber den bekannten Antrieben mit einen zwei- oder mehrstufigen Getriebe ist der erfindungsgemäße Synchronmotor mit nur einer Getriebestufe deutlich unempfindlicher und robuster. Ein getriebeloser Antrieb hat eine nochmals erhöhte Robustheit gegen Stöße.

Im Rahmen der Erfindung wurde festgestellt, dass sich der erfindungsgemäße Hubstaplerantrieb und der darin verwendete Elektromotor sehr gut für Leistungsbereiche kleiner oder gleich 30 Kilowatt eignen. Bevorzugt wird ein derartiger Elektromotor in einem Leistungsbereich kleiner oder gleich 10 Kilowatt, besonders bevorzugt kleiner oder gleich 5 Kilowatt, eingesetzt.

Selbstverständlich kann der Hubstaplerantrieb mit (mindestens) einem permanentmagnetisch erregten Elektromotor im Hubstapler nicht nur als Fahrantrieb eingesetzt werden. Er kann auch zusätzlich oder optional als Hubantrieb eines solchen Hubstaplers oder bzw. zusätzlich als Lenkantrieb in der erfindungsgemäßen Weise ausgebildet sein, also einen Motor aufweisen, dessen Stator mehrphasig zusammengeschaltete Einzelzahnspulen hat und dessen Rotor mindestens 14 permanentmagnetische Pole aufweist, die dem Stator zugewandt sind. Vorzugsweise weist der Hubstapler folglich einen erfindungsgemäßen Hubstaplerantrieb, besonders bevorzugt zwei oder mehr erfindungsgemäße Hubstaplerantriebe auf.

Im Rahmen der Erfindung ist ein Hubstaplerantrieb ein Antrieb mit einem permanentmagnetisch erregtem Elektromotor, der entweder den Hubstapler selbst (als Fahrantrieb) oder Teile des Hubstaplers (beispielsweise als Hubantrieb oder als Lenkantrieb) antreibt. Bevorzugt ist der Elektromotor der Hubstaplerantrieb. Der Antrieb kann in die Radnabe integriert werden.

Vorzugsweise richtet sich der erfindungsgemäße Antrieb mit dem Elektromotor nicht nur auf das Anwendungsgebiet von Hubstaplern, sondern auch auf den Antrieb von anderen Traktionskollektiven, bei denen in ähnlicher Weise wie bei Hubstaplern kurze hohe Beschleunigungen und lange Teillastphasen erforderlich sind.

In Bezug auf die Hubstapler weist der erfindungsgemäße Antrieb den Vorteil auf, dass keine Überdimensionierung des Motors vorgenommen werden muss, wie es bei Gleichstrom- bzw. Asynchronmotoren häufig der Fall ist. Diese Motoren sind im Bezug auf den Teillastbereich häufig überdimensioniert, um das gewünschte und erforderliche Beschleunigungsmoment, das zum Anfahren des Hubstaplers notwendig ist, zu erzielen. Aufgrund des großen Momentenfaktors des erfindungsgemäßen Hubstaplerantriebs, das bevorzugt größer oder gleich 2,3 und besonders bevorzugt größer oder gleich 2,8 ist, kann der Teillastbereich an das dort geforderte Drehmoment (beispielsweise für die kontinuierliche Fahrt des Hubstaplers) angepasst werden. Das Beschleunigungsmoment ist dann immer noch ausreichend groß bzw. kann ausreichend groß eingestellt werden, um auch die vorhandenen Anforderungen an die Beschleunigung zu erfüllen.

Schließlich wurde im Rahmen der Erfindung festgestellt, dass die Kosten, die mit dem Strombedarf des Motors und der Motorfertigung verbunden sind, durch vereinfachte Produktionsprozesse deutlich reduziert werden können, wenn die Akkumulatorspannung mit Hilfe eines Hochsetzstellers bzw. eines Aufwärtswandlers (Englisch: step-upconverter) hochgespannt, also erhöht, wird, bevorzugt um den Faktor 2 bis 5.

Im Rahmen der Erfindung wurde auch erkannt, dass die Antriebsbedürfnisse des Hubstaplers mit einer minimalen Anzahl gleicher Bauteile erfüllt werden können, wenn die Prinzipien des erfindungsgemäßen Antriebs verwendet werden. Dies gilt sowohl im Fall eines elektrischen Differentials (zwei Antriebsräder mit zwei Motoren), als auch für den Hubmotor zum Heben der Lasten mittels des Hubstaplers und für die elektrische Lenkung. Mit einem auf der Grundlage der Erfindung gestalteten Modulbaukasten, der sowohl einen Fahrantrieb, einen Hubantrieb wie auch einen Lenkantrieb umfassen kann und Antriebe mit unterschiedlich großen Leistungen (Drehmoment, Drehzahl) berücksichtigt, können bis zu 30 % der Herstellungskosten des Antriebs eingespart werden, was durch den modularen Aufbau des erfindungsgemäßen Hubstaplerantriebssystems realisiert werden kann.

Im Rahmen der Erfindung wurde auch erkannt, dass der Einsatz eines Synchronmotors für einen Hubstapler besonders gut geeignet ist. Vorzugsweise schließt der Hubstaplerantrieb einen Wechselrichter ein, der ein vektorgesteuerter Frequenzumrichter ist. Der Wechselrichter ermöglicht es, stufenlos Drehzahlen von 0 bis zur Nenndrehzahl zu erreichen, ohne dass das Drehmoment sinkt.

In einer bevorzugten Ausführungsform des Hubstaplerantriebs erzeugt der Wechselrichter einen Speisestrom (englisch: feeding current), der eine momentbildende Stromkomponente I_{q} und eine flussbildende Stromkomponente I_{d} umfasst. Dieser Speisestrom fließt vom Wechselrichter durch die Spulen (Einzelzahnspulen) des Stators eines Elektromotors.

Mit einem derartigen Frequenzumrichter (Wechselrichter), bei dem die beiden Stromkomponenten I_{d} und I_{q} bevorzugt unabhängig voneinander gesteuert werden können, lässt sich eine geeignete Steuerung des Motors vornehmen. Vorzugsweise kann die flussbildende Stromkomponente I_{d} des Speisestroms in ihrer Phasenlage so gesteuert werden, dass ein von ihr erzeugtes magnetisches Feld einer Einzelzahnspule des Stators dem Magnetfeld des jeweils fluchtenden permanentmagnetischen Pols des Rotors entgegengerichtet ist. Somit lässt sich durch geeignete Ansteuerung des Frequenzumrichters ein magnetisches Gegenfeld in einer Einzelzahnspule zu dem magnetischen Feld des Pols erzeugen, der dem Einzelzahn benachbart ist.

Vorteilhaft wird dadurch das Magnetfeld der magnetischen Pole derart gesteuert, vorzugsweise geschwächt, dass eine gewünschte Feldschwächung eintritt. Die Feldschwächung bewirkt, dass der Elektromotor des Hubantriebs über die Nenndrehzahl hinaus betrieben werden kann. Somit ist es möglich, den hochpoligen Synchronmotor des Hubstaplerantriebs auch über den Nenndrehzahlbereich hinaus zu betreiben. Mittels dieser Erkenntnis kann der Wirkungsgrad des Antriebs noch einmal erhöht werden. Der hochpolige Synchronmotor ist folglich ein feldschwächbarer Motor und bietet die damit verbundenen Merkmale, wie sie von anderen Maschinen bekannt sind, deren Feld geschwächt werden kann.

Vorzugsweise können mit entsprechenden Vorkehrungen zudem die Kupferverluste reduziert werden. Die Maschine kann so aufgebaut werden, dass sie sich während der Beschleunigungsphase gut Feldschwächen lässt. Damit kann die Typenleistung des Wechselrichters bzw. Frequenzumrichters minimiert werden, was die Kosten des Antriebs senkt.

Es hat sich als günstig erwiesen, weichmagnetische Materialien zu verwenden, um die Flussführung innerhalb des Materials zu optimieren. Hierdurch ist es möglich, insgesamt das Feldschwächungsverhalten des Motors zu optimieren, also auf einfachere Weise eine Feldschwächung zu erzielen. Auf diese Weise kann auch mit einer relativ kleinen flussbildenden Stromkomponente I_{d} ein großes magnetisches Gegenfeld erzeugt werden. Darüber hinaus ist das Material weniger träge, so dass auch das schnelle Zu- und Abschalten bzw. das schnelle Ändern des Gegenfeldes verbessert werden kann.

Die Erfindung wird nachfolgend anhand von in den Figuren dargestellten bevorzugten Ausführungsformen näher erläutert. Die darin dargestellten Besonderheiten können einzeln oder in Kombination verwendet werden, um bevorzugte Ausgestaltungen der Erfindung zu schaffen. Die beschriebenen Ausführungsformen stellen keine Einschränkung der Allgemeinheit des in den Ansprüchen definierten Gegenstands dar. Es zeigen:
- Figur 1: das Prinzipbild eines Hubstaplers;
- Figur 2: der Wirkungsgrad des erfindungsgemäßen Synchronmotors im Vergleich zum einem bekannten Asynchronmotors;
- Figur 3a-c: je ein Prinzipbild eines Innenläufers und eines Außenläufermotors;
- Figur 4a,b: einen Außenläufermotor mit Bremse;
- Figur 5: einen Radnabenmotor mit Lagerung;
- Figur 6: einen getriebelosen Motor und
- Figur 7: eine schematische Darstellung der Stromkomponenten in einem rotorfesten Koordinatensystem.

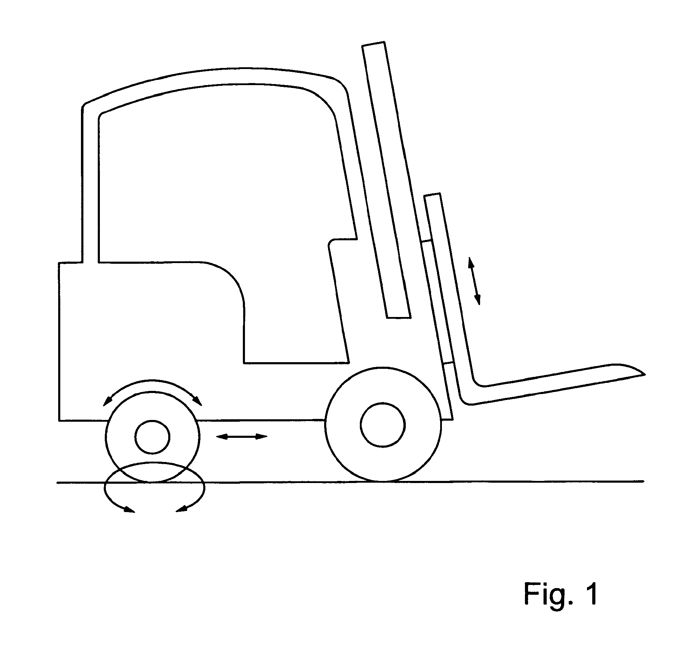

Figur 1 zeigt schematisch einen erfindungsgemäßen Hubstapler 50 und die darin verwirklichten Funktionen von Hubstaplerantrieben, nämlich die Funktion des Fahrens, des Lenkens und des Hebens von Lasten. Ein typischer Einsatz für den erfindungsgemäßen Antrieb ist das lenkbare einzelstehende Antriebsrad 18 des Hubstaplers. Die anderen Antriebe zum Lenken und Heben können ebenfalls mit dem erfindungsgemäßen Antrieb realisiert werden. Der erfindungsgemäße Torque-Motor kann auch in einem elektromechanischen Spindel-Mutter-System eingesetzt werden; der Torque-Motor stellt dann die Mutter dar.

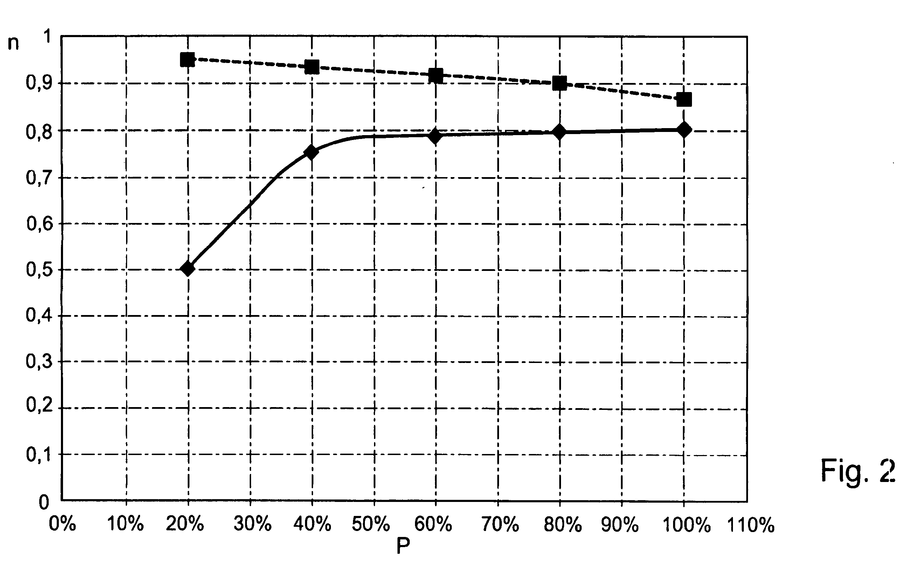

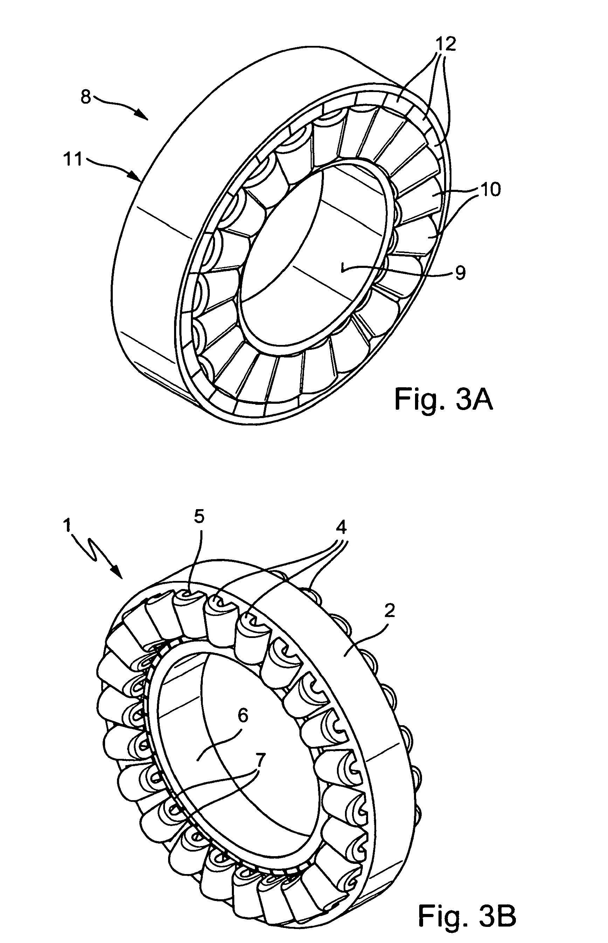

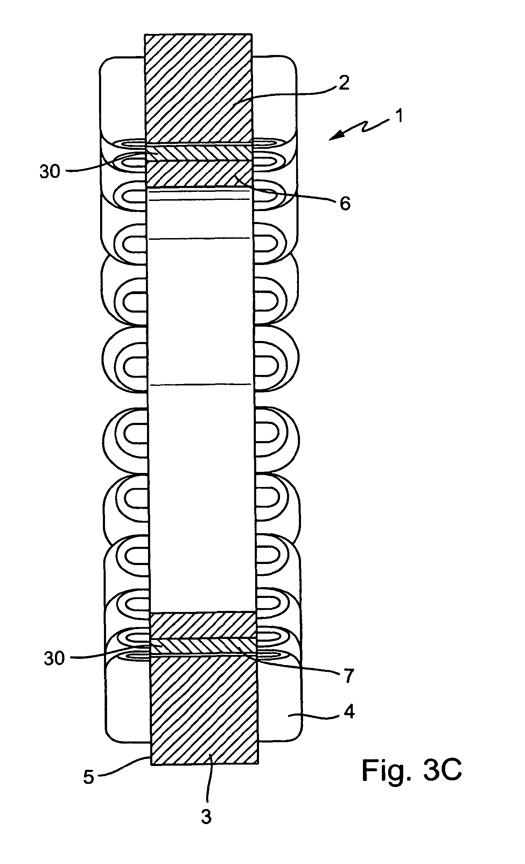

Figur 2 zeigt für zwei verschiedene Elektromotoren den Wirkungsgrad n über die Leistung P in Prozent aufgetragen. In der oberen Kurve A ist der Wirkungsgrad der erfindungsgemäßen Synchronmaschine gezeigt; die untere Kurve B stellt einen Asynchronmotor dar. Die Leistung wird bei einer jeweils konstanten Umdrehungszahl der beiden Maschinen (Synchronmotor mit 300 Umdrehungen pro Minute (U/min), Asynchronmotor mit 1500 U/min) ermittelt. In Figur 3 ist zu erkennen, dass die Asynchronmaschine prinzipiell in dem für Hubstapler wichtigen Teillastbereich (bei kleinen Leistungen) einen schlechteren Wirkungsgrad aufweist. Der Wirkungsgrad der erfindungsgemäßen Synchronmaschine ist in dem Teillastbereich gegenüber der Asynchronmaschine deutlich gesteigert. Hierdurch lässt sich die Betriebsdauer des Hubstaplers mit dem efindungsgemäßen Hubstaplerantrieb bei gleicher Akkumulatorkapazität gegenüber einem Hubstapler mit einem Synchronantrieb um bis zu 50 % erhöhen. Dies wirkt sich sehr positiv auf die Lebensdauer der Akkumulatoren aus. Der Hubstapler kann länger eingesetzt werden; die Standzeiten werden reduziert.

Aus Figur 2 ist auch ersichtlich, dass, unter der Annahme eines gleichen Wirkungsgrades im Beschleunigungstypenpunkt, die hochpolige Synchronmaschine des erfindungsgemäßen Hubstaplerantriebs im Nennbetriebspunkt (hier bei ca. 0,6 kW) einen um ca. 50 % höheren Wirkungsgrad hat. Gegenüber der Asynchronmaschine erhöht die erfindungsgemäße Maschine den Antriebswirkungsgrad um den Faktor 1,5. Daraus resultiert, dass die Akku-Lebensdauer bei Verwendung des erfindungsgemäßen Antriebs um bis zu 50 % erhöht werden kann.

Im Rahmen der Erfindung wurde festgestellt, dass der erfindungsgemäße Hubstaplerantrieb sowohl als Innenläufer als auch als Außenläufer verwendet werden kann. Die angegebene Polzahl größer oder gleich 14 ist nicht nur für Maschinen mit Innenläufern optimal, sondern führt auch bei Synchronmaschinen mit außenlaufendem Rotor zu verbesserten Ergebnissen. Die beiden unterschiedlichen Typen bzw. Bauweisen der Synchronmaschine sind in den Figuren 3a,b dargestellt.

Figur 3a zeigt einen Außenläufermotor 8, mit einem innenliegenden Stator 9 und ein den Stator umschließenden Rotor 11. An der Innenseite des Rotors 11 sind permanentmagnetische Pole in Form von Permanentmagneten 12 angeordnet. Der Stator 9 weist sich radial nach außen erstreckende Einzelzähne auf, die jeweils mit einer Einzelzahnspule 10 umwickelt sind. Deutlich zu erkennen ist, dass bei dem Außenläufermotor 8 eine Mehrzahl von Einzelzahnspulen (hier 21) aufweist. Der Rotor 11 hat ebenfalls eine hohe Anzahl von Polen, die noch über der Anzahl der Einzelzahnspulen 10 liegt. Im abgebildeten Beispiel sind an der Innenseite des Rotors 11 siebenundzwanzig Magnete 12 angeordnet.

Figur 3b zeigt das umgekehrte Prinzip eines Innenläufers 1, bei dem der Rotor 6 von dem Stator 2 umschlossen wird. Deutlich zu erkennen ist, dass hierbei der Rotordurchmesser 6 im Vergleich zum Außenläufermotor 8 deutlich verringert ist.

Figur 3c zeigt einen Schnitt durch den Innenläufer 1 aus Figur 3b. Ein außenliegender Stator 2 weist eine Mehrzahl von Einzelzähnen 3 auf, die jeweils mit einer Einzelzahnspule 4 umwickelt sind. Das Joch 5 des Stators 2 ist an der Außenseite des Stators 2 angeordnet. Die Einzelzähne 3 erstrecken sich radial nach innen.

Im Inneren des Stators 2 ist ein permanentmagnetisch erregter Rotor 6 angeordnet, der an seiner Außenseite eine Mehrzahl von Permanentmagneten 7 trägt, die die permanentmagnetischen Pole 30 bilden. Die Permanentmagnete 7 können auch in den Rotor 6 versenkt werden, d.h. vollständig von dem Rotormaterial umschlossen sein (sog. vergrabene Magnete). Zwischen der Außenseite der Magnete 7 und dem Stator 2 entsteht ein Luftspalt, so dass der Rotor 6 innerhalb des Stators 2 drehen kann. Elektromagnetisch beinhaltet der Luftspalt auch die Höhe der Magnete, d.h., in die Berechnung des magnetischen Flusses geht neben der Größe (Höhe) des Luftspalts auch die Höhe der Magnete mit ein.

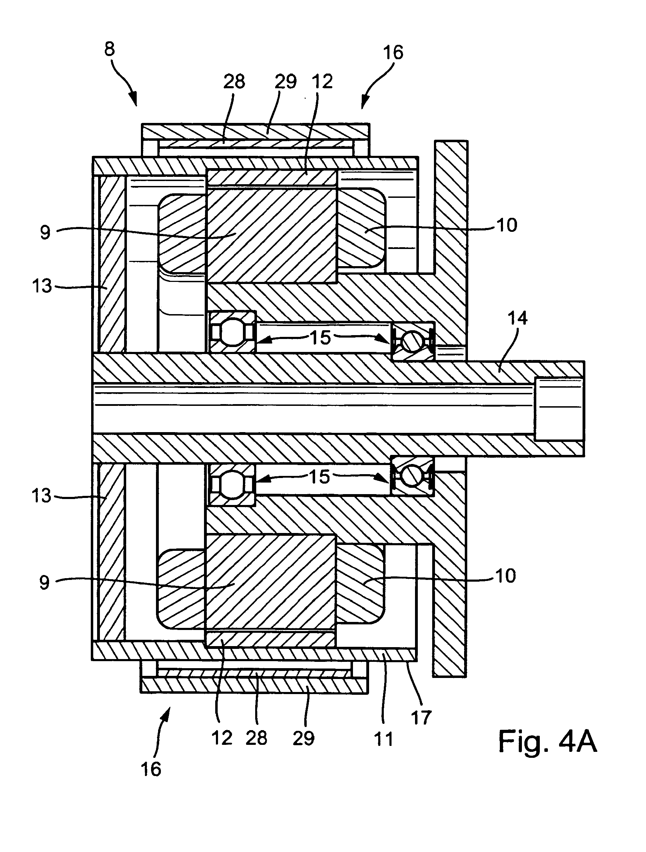

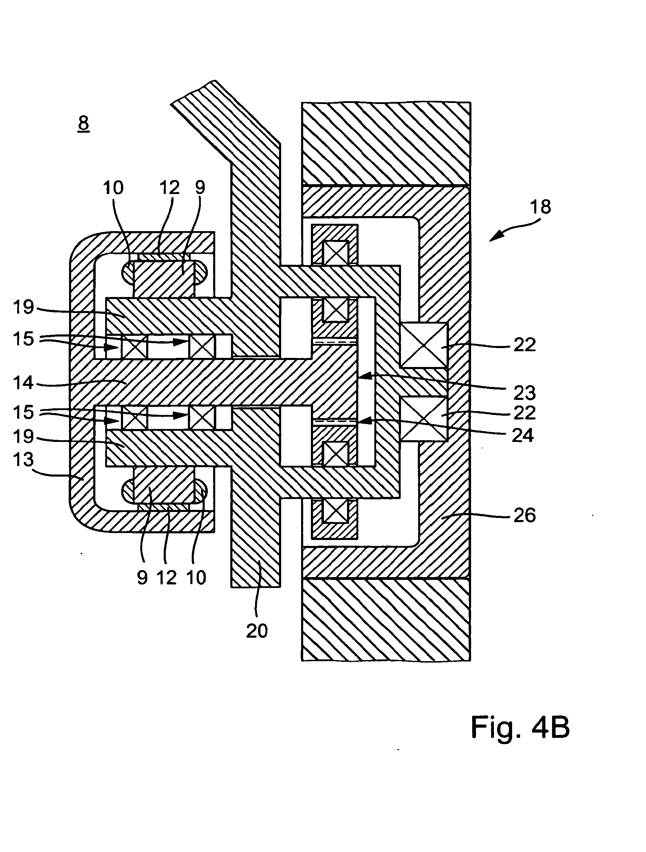

Ein Antriebsstrang mit Außenläufer 8 lässt sich durch eine Betriebsbremse, die an der Außenseite des Außenrotors angreift, einfach bremsen. Auch ist es möglich, dass eine Parkbremse- und/oder eine Notbremseinrichtung an den außenliegenden Rotor angreift. Die Figuren 4a,b zeigen beispielhaft einen Fahrantrieb mit einem Außenläufermotor und einer Bremseinrichtung.

Figur 4a zeigt einen Außenläufermotor 8 mit einem innenliegenden Stator 9 im Schnitt. Der Stator 9 trägt eine Mehrzahl von Einzelzähnen, um die je eine Einzelzahnspule 10 gewickelt ist. Ein Rotor 11 dreht sich um die Außenseite des Stators 9, wobei der Rotor an seiner Innenseite eine Mehrzahl von (Permanent-)Magneten 12 (permanentmagnetische Pole) aufweist. Der Rotor 11 ist derart ausgebildet, dass er eine Verbindungsplatte 13 umfasst, deren Flächennormale sich in Richtung der Rotationsachse des Außenläufers 8 erstreckt. An der Verbindungsplatte 13 ist eine Rotorwelle 14 angeordnet, die als Radachse für ein angetriebenes Rad 18 dient. Die Rotorwelle 14 erstreckt sich koaxial zur Rotationsachse des Außenläufers 8 durch den Stator 9 hindurch. Zwischen der Rotorwelle 14 und dem Stator 9 sind deshalb Lager 15 vorgesehen, so dass die Rotorwelle 14 in dem feststehenden Stator 9 drehbar gelagert ist.

Außerhalb des Rotors 11 ist eine Bremseinrichtung 16 vorgesehen, die eine Bremse mit Bremsbacken 28 umfasst. Die Bremseinrichtung 16 ist derart angeordnet, dass die als Bremsbacken 28 ausgebildeten Bremselemente 29 an eine Außenseite 17 des Rotors 11 angreifen, um den Rotor 11 abzubremsen. Die Außenseite 17 bildet dabei die radial nach außen gerichtete Fläche des Rotors 11, die beim Bremsen von den Bremselementen 29 kontaktiert wird.

Figur 4b zeigt den Außenläufer 8 mit einem Rad 18 im eingebauten Zustand in einem Hubstapler. Der Stator 9 ist über Haltestreben 19 mit der Karosserie 20 des Hubstaplers verbunden. Der Außenläufer 8 ist hierbei innerhalb der Karosserie 20 angeordnet. Außerhalb der Karosserie 20 ist eine Halterung 21 vorgesehen, an der das Rad 18 drehbar über ein Radlager 22 angeordnet ist.

Das freie Ende der Rotorwelle 14 ist ein innenliegendes Zahnrad 23, das die "Sonne" 23 eines Planetengetriebes 24 bildet. Die Planeten 25 des Getriebes sind zwischen der Radnabe 26 des Rads 18 und der Sonne 23 gelagert. Auf diese Weise wird ein einstufiges Getriebe 24 gebildet, das mit dem Außenläufermotor 8 kombiniert ist.

Obwohl die dargestellte Außenläuferkonstruktion in der Elektrotechnik an sich ungebräuchlich ist, unter anderem weil die stromführenden Spulen des Stators innen liegen und dies thermische Probleme verursachen kann, hat sich im Rahmen der Erfindung jedoch gezeigt, dass eine derartige Ausbildung mit dem erfindungsgemäßen Hubantrieb bevorzugt ist. Da aufgrund des hohen Lastkollektivs die Dauerleistung im Teillastbereich relativ gering ist (bei gleichzeitigem entsprechend hohem gewünschten Beschleunigungsmoment), sind die thermischen Probleme aufgrund der relativ geringen erforderlichen Dauerleistung ebenfalls klein. Andererseits hat die Außenläuferkonstruktion jedoch den Vorteil, dass ein sehr großer Durchmesser des Rotors erzeugt werden kann, der die bekannten Vorteile hinsichtlich des Drehmoments aufweist. Bei einem vorgegebenen Durchmesser des Rotors kann also mit der Außenläuferkonstruktion eine sehr viel kompaktere Bauweise erzielt werden.

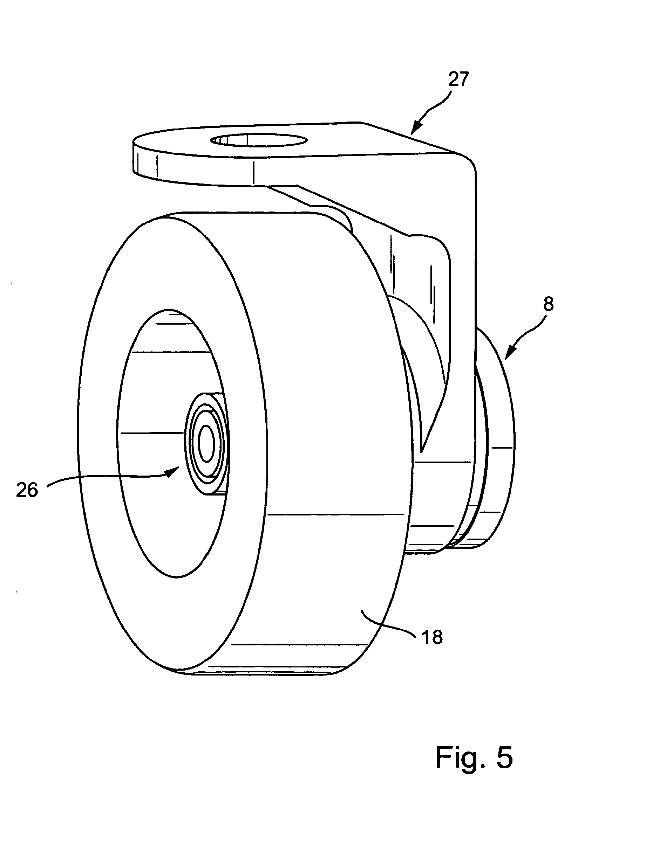

Figur 5 zeigt nochmals einen Außenläuferantrieb 8 mit einem einstufigen Getriebe, der über eine spezielle Winkelhalterung 27 an der Karosserie eines Hubstaplers befestigt werden kann. Deutlich zu erkennen ist, dass die Winkelhalterung 27 drehbar mit der Karosserie verbunden werden kann. Da der gesamte Antrieb einschließlich Motor an der Radnabe sitzt, ergibt sich damit ein insgesamt sehr tiefer Schwerpunkt des Antriebstrangs, was Vorteile in Bezug auf die Kippstabilität des Hubstaplers hat.

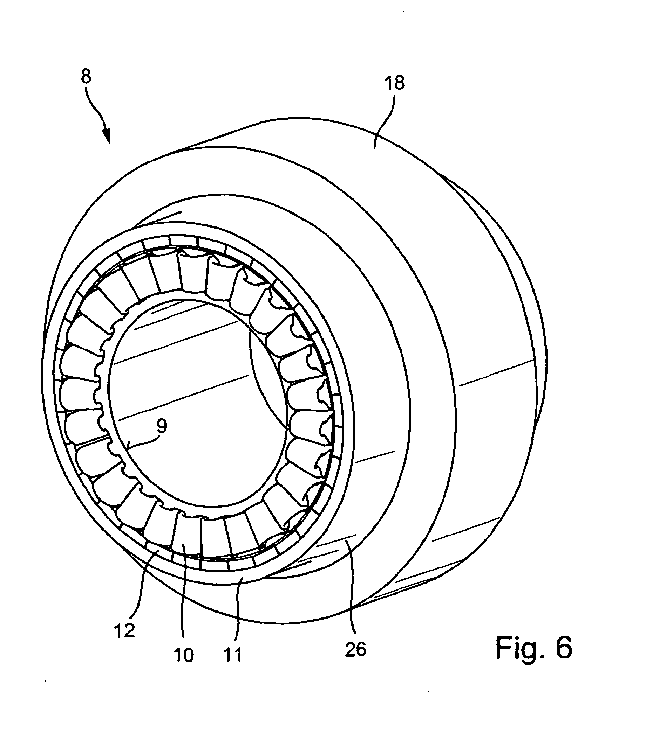

Figur 6 zeigt einen Außenläuferantrieb 8, bei dem auf ein Getriebe verzichtet wurde. Der innenliegende Stator 9 weist eine Mehrzahl von Einzelzahnspulen 10 auf. Der den Stator 9 umschließende Rotor 11 ist direkt mit der Radnabe 26 des Rads 18 verbunden. Auf der Radnabe 26 selbst ist dann ein Reifen aufgebracht. Die getriebelose Bauweise wird zum einen zu einer weiteren Vergrößerung des Durchmessers des Rotors 11, zum anderen zu einer noch kompakteren und kleineren Bauweise.

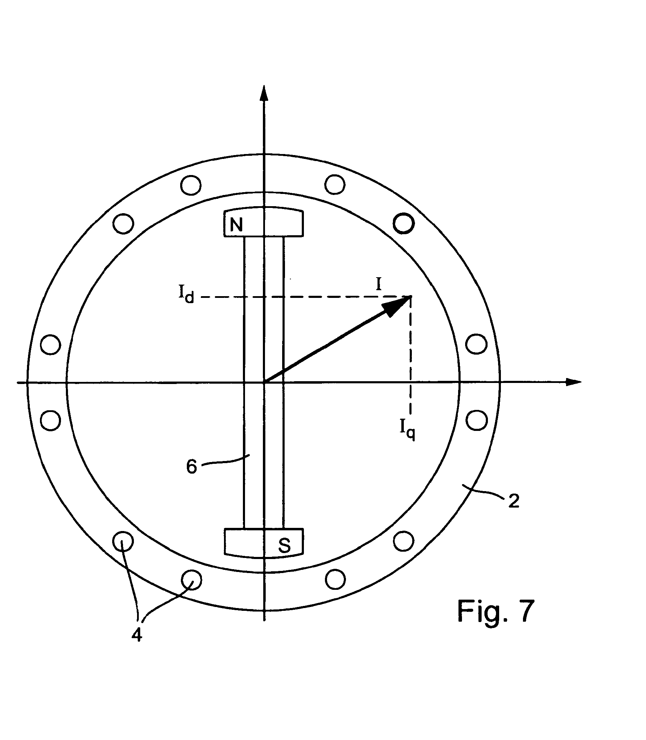

Anhand von Figur 7 wird das Prinzip des von einem Wechselrichter erzeugten Speisestroms mit einer momentbildenden Stromkomponente I_{q} und einer flussbildenden Stromkomponente I_{d} näher erläutert. Um das Magnetfeld der magnetischen Pole zu schwächen, damit der Elektromotor des Hubstaplerantriebs über seine Nenndrehzahl hinaus geregelt werden kann, ist ein Speisestrom I notwendig, der eine momentbildende Stromkomponente I_{q} und eine flussbildende Stromkomponente I_{d} aufweist. Auf diese Weise lässt sich durch geeignete Einstellung der beiden Stromkomponenten das Feldschwächverhalten optimieren. Im Rahmen der Erfindung wird ein "rotorfestes" Koordinatensystem eingeführt, das anhand von Figur 7 näher erläutert wird.

Figur 7 zeigt schematisch einen Stator (2) mit mehreren Einzelzahnspulen (4). Im Inneren des Stators (2) ist ein Polpaar eines Rotors (6) abgebildet. Zur Erläuterung der Stromregelung mittels eines Wechselrichters wird auf das rotorfeste Koordinatensystem zurückgegriffen, das mit einem Polpaar eines Rotors (6) verbunden ist und mit diesem Polpaar und dem Rotor (6) rotiert. Das Koordinatensystem hat eine Längsachse (d), die entlang der Magnetisierungsrichtung des Polpaares (entspricht dem Maximum des magnetischen Flusses) ausgerichtet ist, und eine Querachse (q), die um 90° verdreht zur Magnetisierungsrichtung und damit zum Maximum des magnetischen Feldes ausgerichtet ist.

Die Stromregelung des Synchronmotors für den Hubstapler durch den Wechselrichter erfolgt bevorzugt bei Betrachtung im rotorfesten Koordinatensystem. Dazu wird der Speisestrom "I", der durch die unbeweglichen (ortsfesten) Spulen des Stators (2) fließt, in das sich drehende rotorfeste Koordinatensystem transformiert und in zwei Komponenten aufgeteilt (Koordinaten-transformiert, Figur 7).
a) I_{d} - Stromkomponente in Richtung der Längsachse ("Längsstrom") und
b) I_{q} - Stromkomponente in Richtung der Querachse ("Querstrom").

Betrag und Richtung der zwei Stromkomponenten ändern sich während der Rotor-Drehung ständig bzw. werden vom Wechselrichter eingestellt.

Der Querstrom beeinflusst das erzeugte Drehmoment und wird deshalb im Rahmen dieser Erfindung als "Moment bildende Stromkomponente I_{q}" bezeichnet. Der Längsstrom beeinflusst den Magnetisierungszustand (den magnetischen Fluss) und wird deshalb im Rahmen dieser Erfindung als "flussbildende Stromkomponente I_{d}" bezeichnet.

Da die beiden Stromkomponenten I_{d} und I_{q} unabhängig voneinander im Frequenzumrichter (Wechselrichter) gesteuert und eingestellt werden können, lässt sich mittels des Wechselrichters eine geeignete und effektive Steuerung des Hubstaplerantriebs vornehmen. Die flussbildende Stromkomponente I_{d} des Speisestroms wird in ihrer Phasenlage derart geregelt, dass das von ihr erzeugte Magnetfeld in einer Einzelzahnspule des Stators dem Magnetfeld des permanentmagnetischen Pols des Rotors entgegengerichtet ist, der mit der entsprechenden Einzelzahnspule fluchtet. Auf diese Weise kann eine sehr exakte und einfache Regelung des Motors erzielt werden. Der Motor kann über seine Nenndrehzahl betrieben werden. Damit vereint der stromgeregelte Motor die Vorteile des Synchronmotors und des Asynchronmotors.

## Patentansprüche

1. Hubstaplerantrieb mit einem permanentmagnetisch erregten Elektromotor, welcher umfasst
einen Stator (1,9) mit Zähnen, um die Spulen gewickelt sind, die als Einzelzahnspulen (4,10) mehrphasig zusammengeschaltet sind, und
einen Rotor (6,11) mit permanentmagnetisch erregten Polen (30), die dem Stator (1,9) zugewandt sind, und eine **dadurch gekennzeichnet, dass** der Rotor Polzahl von mindestens 14 hat.

2. Hubstaplerantrieb nach Anspruch 1, **dadurch gekennzeichnet, dass** er kein Getriebe einschließt.

3. Hubstaplerantrieb nach Anspruch 1 oder 2, **dadurch gekennzeichnet, dass** die Polzahl des Rotors (6,11) mindestens 18, bevorzugt mindestens 20 ist.

4. Hubstaplerantrieb nach einem der vorhergehenden Ansprüche, **dadurch gekennzeichnet, dass** er ein Lenkantrieb oder ein Hubantrieb ist.

5. Hubstaplerantrieb nach einem der Ansprüche 1 bis 3, **dadurch gekennzeichnet, dass** er in eine Radnabe (26) eines Hubstaplers integriert ist.

6. Hubstaplerantrieb nach einem der vorhergehenden Ansprüche, **dadurch gekennzeichnet, dass** er einen Aufwärtswandler für die Betriebsspannung des Elektromotors einschließt.

7. Hubstaplerantrieb nach einem der vorhergehenden Ansprüche, **dadurch gekennzeichnet, dass** er einen Wechselrichter einschließt, und der Wechselrichter einen Speisestrom mit einer momentbildenden Stromkomponente und einer flussbildenden Stromkomponente erzeugt.

8. Hubstaplerantrieb nach Anspruch 7, **dadurch gekennzeichnet, dass** die flussbildende Stromkomponente des Speisestroms in ihrer Phasenlage so gesteuert werden kann, dass ein von der flussbildenden Stromkomponente erzeugtes magnetisches Feld dem Magnetfeld des jeweils fluchtenden permanentmagnetischen Pols (30) entgegengerichtet ist.

9. Hubstaplerantrieb nach Anspruch 7 oder 8, **dadurch gekennzeichnet, dass** das Magnetfeld der permanentmagnetischen Pole (30) derart geschwächt werden kann, dass eine gewünschte Feldschwächung eintritt, wodurch eine Drehzahlregelung des Antriebs über die Nenndrehzahl hinaus stattfinden kann.

10. Hubstaplerantrieb nach einem der vorhergehenden Ansprüche, **dadurch gekennzeichnet, dass** wenigstens jeder zweite Zahn (3) des Stators (1,9), bevorzugt jeder Zahn (3) des Stators (1,9) eine Einzelzahnspule (4,10) aufweist.

11. Hubstaplerantrieb nach einem der vorhergehenden Ansprüche, **dadurch gekennzeichnet, dass** der Motor ein Außenläufermotor (8) ist, bei dem der Rotor (11) mit den permanentmagnetischen Polen (30) den Stator (9) umschließt.

12. Hubstaplerantrieb nach Anspruch 11, **dadurch gekennzeichnet, dass** er eine Bremsvorrichtung (16) umfasst, die an der Außenseite (17) des Rotors (11) derart angreift, dass deren Bremselemente (29) beim Bremsen die nach radial außen gerichtete Fläche (17) des Rotors (11) kontaktiert.

13. Hubstaplerantrieb nach einem der vorhergehenden Ansprüche, **dadurch gekennzeichnet, dass** das Verhältnis von Beschleunigungsmoment zu Teillastmoment des Antriebs, bevorzugt des Motors des Antriebs größer oder gleich 2, bevorzugt größer oder gleich 2,5 und besonders bevorzugt größer oder gleich 2,8 ist

14. Hubstaplerantrieb nach einem der vorhergehenden Ansprüche, **dadurch gekennzeichnet**, das die Flussführung mittels weichmagnetischer Materialien so ausgebildet ist, dass eine Feldschwächung des Motors vereinfacht wird.

15. Hubstapler mit einem Hubstaplerantrieb nach einem der vorhergehenden Ansprüche.

## Claims

1. A forklift truck drive with a permanent magnet electric motor, which includes a stator (1, 9) with teeth, about which are wound the coils, which are connected together in the form of individual tooth coils (4, 10) in a multiphase manner and a rotor (6, 11) with permanent magnet poles (30), which are directed towards the stator (1, 9) and **characterised in that** the rotor has a number of poles of at least fourteen.

2. A forklift truck drive as claimed in claim 1, **characterised in that** it includes no gear mechanism.

3. A forklift truck drive as claimed in claim 1 or 2, **characterised in that** the number of poles of the rotor (6, 11) is at least eighteen, preferably at least twenty.

4. A forklift truck drive as claimed in one of the proceeding claims, **characterised in that** it is a steering drive or a lifting drive.

5. A forklift truck drive as claimed in one of claims 1 to 3, **characterised in that** it is integrated into a wheel hub (28) of a forklift truck.

6. A forklift as claimed in one of the proceeding claims, **characterised in that** it includes a step-up converter for the operating voltage of the electric motor.

7. A forklift truck drive as claimed in one of the proceeding claims, **characterised in that** it includes an inverter and the inverter produces a supply current with a torque-generating current component and a flux-generating current component.

8. A forklift drive as claimed in claim 7, **characterised in that** the phasing of the flux-generating current component of the supply current can be so controlled that a magnetic field produced by the flux-generating current component is opposed to the magnetic field of the currently aligned permanent magnetic pole (30).

9. A forklift drive as claimed in claim 7 or 8, **characterised in that** the magnetic field of the permanent magnetic poles (30) can be attenuated such that a desired field attenuation occurs, whereby a speed control of the drive above the nominal speed can occur.

10. A forklift truck drive as claimed in one of the preceding claims, **characterised in that** at least every second tooth (3) of the stator (1, 9), preferably every tooth of the stator (1, 9), has a single tooth coil (4, 10).

11. A forklift truck drive as claimed in one of the preceding claims, **characterised in that** the motor is an external rotor motor (8), in which the rotor (11) surrounds the stator (9) with the permanent magnetic poles (3).

12. A forklift truck drive as claimed in claim 11, **characterised in that** it includes a braking device (15), which engages the outer surface of the rotor (11) such that during braking its braking elements (29) contact the radially outwardly directed surface (17) of the rotor (11).

13. A forklift truck drive as claimed in one of the preceding claims, **characterised in that** the ratio or the acceleration torque to the partial load torque of the drive, preferably of the motor of the drive, is greater than or equal to 2, preferably greater than or equal to 2.5 and particularly preferably greater than or equal to 2.8.

14. A forklift truck drive as claimed in one of the preceding claims, **characterised in that** the flux guide is so constructed using soft magnetic materials that a field attenuation of the motor is simplified.

15. A forklift truck with a forklift truck drive as claimed in one of the preceding claims.

## Revendications

1. Entraînement de chariot élévateur comprenant un moteur électrique excité par aimants permanents, qui comprend
un stator (1, 9) pourvu de dents autour desquelles sont enroulées des bobines qui sont interconnectées de manière polyphasée en tant que bobines de dent individuelles (4, 10) et
un rotor (6, 11) comprenant des pôles (30) excités d'aimant permanent qui sont tournés vers le stator (1, 9), et **caractérisé en ce que** le rotor a un nombre de pôles égal à au moins 14.

2. Entraînement de chariot élévateur selon la revendication 1, **caractérisé en ce qu'**il ne comprend pas de mécanisme de transmission.

3. Entraînement de chariot élévateur selon la revendication 1 ou 2, **caractérisé en ce que** le nombre de pôles du rotor (6, 11) est égal à au moins 18, de préférence au moins 20.

4. Entraînement de chariot élévateur selon l'une des revendications précédentes, **caractérisé en ce qu'**il s'agit d'un entraînement directionnel ou d'un entraînement de levage.

5. Entraînement de chariot élévateur selon l'une des revendications 1 à 3, **caractérisé en ce qu'**il est intégré dans un moyeu de roue (26) d'un chariot élévateur.

6. Entraînement de chariot élévateur selon l'une des revendications précédentes, **caractérisé en ce qu'**il inclut un convertisseur élévateur pour la tension de service du moteur électrique.

7. Entraînement de chariot élévateur selon l'une des revendications précédentes, **caractérisé en ce qu'**il inclut un onduleur et l'onduleur génère un courant d'alimentation avec une composante de courant formant un couple et une composante de courant formant un flux.

8. Entraînement de chariot élévateur selon la revendication 7, **caractérisé en ce que** la relation de phase de la composante de courant du courant d'alimentation formant un flux peut être commandée de manière à ce qu'un champ magnétique engendré par la composante de courant formant un flux soit opposé au champ magnétique du pôle d'aimant permanent (30) aligné respectif.

9. Entraînement de chariot élévateur selon la revendication 7 ou 8, **caractérisé en ce que** le champ magnétique des pôles d'aimant permanent (30) peut être affaibli de telle sorte qu'il se produise un affaiblissement souhaité du champ, grâce à quoi un réglage de la vitesse de l'entraînement peut avoir lieu au-delà de la vitesse nominale.

10. Entraînement de chariot élévateur selon l'une des revendications précédentes, **caractérisé en ce qu'**au moins une dent (3) sur deux du stator (1, 9), de préférence chaque dent (3) du stator (1, 9), présente une bobine de dent individuelle (4, 10).

11. Entraînement de chariot élévateur selon l'une des revendications précédentes, **caractérisé en ce que** le moteur est un moteur à rotor extérieur (8) dans lequel le rotor (11) entoure le stator (9) avec les pôles d'aimant permanent (30).

12. Entraînement de chariot élévateur selon la revendication 11, **caractérisé en ce qu'**il comprend un dispositif de freinage (16) qui se met en prise avec le côté extérieur (17) du rotor (11) de manière à ce que ses éléments de freinage (29) soient en contact, lors du freinage, avec la surface (17) du rotor (11) dirigée radialement vers l'extérieur.

13. Entraînement de chariot élévateur selon l'une des revendications précédentes, **caractérisé en ce que** le rapport entre le couple d'accélération et le couple en charge partielle de l'entraînement, de préférence du moteur de l'entraînement, est supérieur ou égal à 2, de préférence supérieur ou égal à 2,5 et, plus préférablement, supérieur ou égal à 2,8.

14. Entraînement de chariot élévateur selon l'une des revendications précédentes, **caractérisé en ce que** le guidage du flux est réalisé au moyen de matériaux magnétiques doux de telle sorte que l'affaiblissement du champ du moteur est simplifié.

15. Chariot élévateur pourvu d'un entraînement de chariot élévateur selon l'une des revendications précédentes.
